# EUROPEAN PATENT SPECIFICATION

(11) **EP 3 531 031 B1**
(45) Date of publication and mention of the grant of the patent: **21.07.2021**
(21) Application number: 18158002.8
(22) Date of filing: 22.02.2018
(51) Int. Cl.: F24D 19/10, F16K 31/00, G05D 23/02

(54) **RADIATOR BALANCING DEVICE**
AUSGLEICHSVORRICHTUNG FÜR HEIZRADIATOREN
DISPOSITIF D'ÉQUILIBRAGE DE RADIATEUR

(43) Date of publication of application: 28.08.2019
(73) Proprietor: Honeywell Technologies Sarl, 1180 Rolle (CH)
(72) Inventor: Macourek, Karel, 68501 Bucovice (CZ); Nespurek, Lukas Pavel, 63700 Brno, Brno-mesto (CZ)
(74) Representative: Sturm, Christoph

(56) References cited:
- EP-A1- 0 848 311
- EP-A2- 1 744 105
- US-A1- 2016 103 456
- US-A1- 2016 349 770

## Description

The present invention relates to a radiator balancing device.

The product leaflet "Verafix-VK; V2461, V2471; PRESETTABLE H-BLOCK FOR COMPACT RADIATORS; EN0H-2207GE25 R0115; Honeywell International Inc.; January 2015" discloses a radiator balancing device for connecting a radiator to pipes of a hydronic heating system so that a heating medium can flow from a supply pipe of the hydronic heating system into the radiator and then from the radiator into a return pipe of the hydronic heating system. Said radiator balancing device comprises a housing. The housing has a first connection interface adapted to be connected to the supply pipe of the hydronic heating system, a second connection interface adapted to be connected to a supply connection of a radiator, a third connection interface adapted to be connected to a return connection of the radiator, and a fourth connection interface adapted to be connected to the return pipe of the hydronic heating system. The housing defines a supply flow path extending between the first connection interface and the second connection interface and a return flow path extending between the third connection interface and the fourth connection interface. Such a radiator balancing device shall maintain a desired heating medium temperature drop over the radiator, while ensuring that the return temperature of the heating medium does not exceed a value required to ensure condensation in a boiler that tempers the heating medium. Radiator balancing devices known from the prior art have problems to fulfill these requirements.

EP 1 744 105 A2 discloses a radiator balancing device according to the preamble of claim 1.

Other prior art is disclosed by US 2016/103456 A1.

Against this background, a novel radiator balancing device is provided.
The radiator balancing device according to the present invention is defined in the claim 1.

The radiator balancing device comprises a first thermal expansion element, wherein the expansion status of the first thermal expansion element depends from the temperature of the heating medium within the supply flow path. Preferably, the first thermal expansion element is at least partially positioned with the supply flow path of the housing. The first thermal expansion element may be in direct or indirect contact with the heating medium within the supply flow path.

The radiator balancing device further comprises a second thermal expansion element, wherein the expansion status of the second thermal expansion element depends from the temperature of the heating medium within the return flow path. Preferably, the second thermal expansion element is at least partially positioned with the return flow path of the housing. The second thermal expansion element may be in direct or indirect contact with the heating medium within the return flow path.

The radiator balancing device further comprises a valve having a valve seat provided within the return flow path of the housing and a valve plunger, wherein a change in the thermal expansion status of the second thermal expansion element causes a change in the relative position between the valve plunger and the valve seat of the valve.

The radiator balancing device further comprises a piston positioned between the first thermal expansion element and the second thermal expansion element. The piston acts in combination with the two thermal expansion elements in such a way that a change in the thermal expansion status of the first thermal expansion element impacts the position of the second thermal expansion element and may thereby cause a change in the relative position between the valve plunger and the valve seat of the valve.

The radiator balancing device according to the present invention provides a mass flow of the heating medium through a radiator that is dynamically adjusted, whereby the radiator gets just the mass flow of the heating medium which it is able to cool down to the desired return temperature of the heating medium. When the supply temperature of the heating medium is reduced because of e.g. load compensation, the radiator balancing device readjusts to still keep the same temperature drop over the radiator. In case that the supply temperature of the heating medium exceeds a certain value, the radiator balancing device ensures that the return temperature of the heating medium does not exceed values needed for condensation at a boiler, and at the same time allows for using the radiator balancing device in condensation systems with a high supply temperature of the heating medium and correspondingly high temperature drop over the radiator.

The valve seat is provided by a valve seat element that is screwed into the housing, wherein the screwing position of that valve seat element defines the closing temperature of the valve. This ensures an easy and reliable pre-setting of the radiator balancing device. The valve plunger may be provided by an end of the second thermal expansion element or by a separate element.

Preferably, the radiator balancing device comprises further a stop element fixedly mounted within the housing, wherein the stop element provides a first stop for the first thermal expansion element, wherein the stop element provides a second stop for the piston, and wherein the first stop and the second stop both limit the impact of the change in the thermal expansion status of the first thermal expansion element to the relative position between the valve plunger and the valve seat of the valve. The first stop limits the impact of the change in the thermal expansion status of the first thermal expansion element to the relative position between the valve plunger and the valve seat of the valve when the temperature of the heating medium within the supply flow path decreases. The second stop limits the impact of the change in the thermal expansion status of the first thermal expansion element to the relative position between the valve plunger and the valve seat of the valve when the temperature of the heating medium within the supply flow path increases. This is very beneficial to maintain a desired heating medium temperature drop over the radiator while ensuring that the return temperature of the heating medium does not exceed a value required to ensure condensation in a boiler.

Preferably, a first piston section of the piston is coupled to a first side of the first thermal expansion element, wherein a first spring tends to press the first side of the first thermal expansion element against the first piston section of the piston. A second piston section of the piston is coupled to the second thermal expansion element, wherein a second spring tends to press the piston against the second stop of the stop element. The springs ensure that the lengths of the thermal expansion elements correspond to the respective temperatures of the heating medium with the respective flow path.

Preferred developments of the invention are provided by the dependent claims and the description which follows. Exemplary embodiments are explained in more detail on the basis of the drawing, in which:
- Figure 1: shows a schematic drawing of a hydronic heating system;
- Figure 2: shows a diagram illustrating the principle of load compensation in such a hydronic heating system;
- Figure 3: shows a cross section of a radiator balancing device according to the present invention in a first status of the same;
- Figure 4: shows a cross section of the radiator balancing device according to the present invention in a second status of the same;
- Figure 5: shows a cross section of the radiator balancing device according to the present invention in a third status of the same;
- Figure 6: shows a cross section of the radiator balancing device according to the present invention in a fourth status of the same;
- Figure 7: shows a cross section of the radiator balancing device accord-ing to the present invention in a fifth status of the same;
- Figure 8: shows a cross section of the radiator balancing device accord-ing to the present invention in a sixth status of the same;

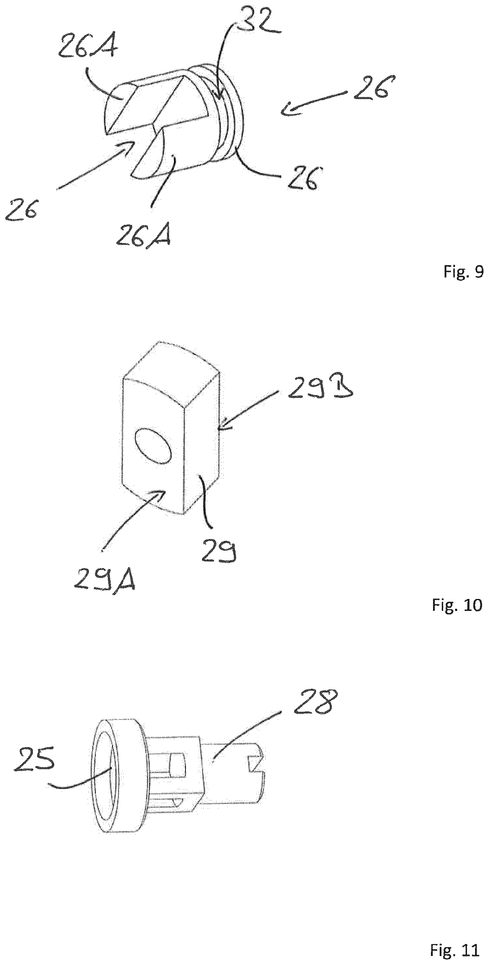

- Figure 9: shows a perspective view of a piston of the radiator balancing device according to the present invention;
- Figure 10: shows a perspective view of a stop element of the radiator bal-ancing device according to the present invention; and
- Figure 11: shows a perspective view of an element providing a valve seat of the radiator balancing device according to the present inven-tion.

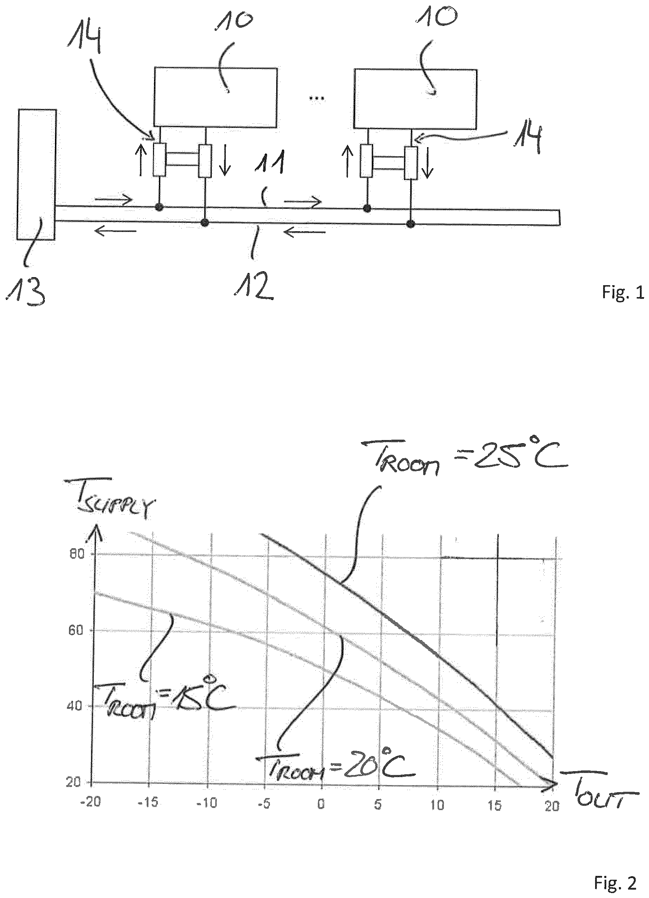

Figure 1 schematic drawing of a hydronic heating system. The heating system shown in Figure 1 comprises several radiators 10. The radiators 10 are connected to a supply pipe 11 and to a return pipe 12 of the hydronic heating system. A boiler 13 provides a tempered heating medium. Each radiator 10 is connected to the supply pipe 11 of the hydronic heating system and to the return pipe 12 of the hydronic heating system by a radiator balancing device 14.

Figure 2 illustrates how the boiler 13 may temper the heating medium. Fig. 2 shows the supply temperature T_{SUPPLY} of the heating medium tempered by the boiler 13 over the outside ambient temperature T_{OUT} for different nominal room temperatures T_{ROOM}. As illustrated, for a defined outside temperature T_{OUT} the supply temperature T_{SUPPLY} of the heating medium increases when the nominal room temperature T_{ROOM} increases. This is a well-known principle of equither-mal regulation of boilers in heating systems to provide load compensation. It should be noted that other strategies to temper the heating medium may be used. E.g., if information about the outside temperature is not available, the heating medium may be tempered depending on a temperature of the heating medium with the return pipe 12.

It is desired to maintain a desired heating medium temperature drop over each radiator 10, while ensuring that the return temperature of the heating medium does not exceed a value required to ensure condensation in the boiler 13.

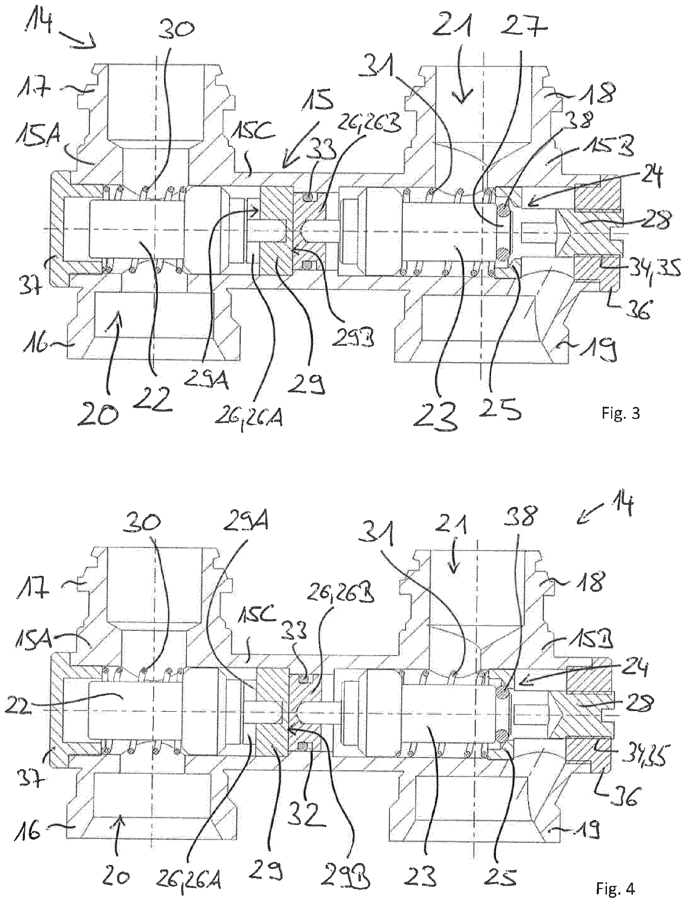

The present invention provides radiator balancing device 14 which can fulfill these requirements. Figures 3 to 8 show cross sections of the radiator balancing device 14 according to the present invention in different statuses of the same.

The radiator balancing device 14 comprises a housing 15. The housing 15 has a first connection interface 16 adapted to be connected to the supply pipe 11 of the hydronic heating system, a second connection interface 17 adapted to be connected to a supply connection of a radiator 10, a third connection interface 18 adapted to be connected to a return connection of the radiator 10, and a fourth connection interface 19 adapted to be connected to the return pipe 12 of the hydronic heating system.

The housing 15 defines a supply flow path 20 extending between the first connection interface 16 and the second connection interface 17 and a return flow path 21 extending between the third connection interface 18 and the fourth connection interface 19.

Heating medium can flow from the supply pipe 11 into the supply flow path 20 of the radiator balancing device 14 and from the supply flow path 20 of the radiator balancing device 14 into the supply connection of the radiator 10. Then, the heating medium flows through the radiator 10 towards the return connection of the same. Then, the heating medium can flow from the return connection of the radiator 10 into the return flow path 21 of the radiator balancing device 14 and from the return flow path 21 of the radiator balancing device 14 into the return pipe 12 of the the hydronic heating system.

In the shown embodiment, the housing 15 is provided by a block, preferably by a H-block, having a first housing section 15A that provides the supply flow path 20, having a second housing section 15B that provides the return flow path 21 and having a third housing section 15C that extends between the first housing section 15A and the second housing section 15B. The second housing section 15B runs parallel to first housing section 15A. The third housing section 15C runs perpendicular to first housing section 15A and the second housing section 15B.

The radiator balancing device 14 comprises a first thermal expansion element 22. Preferably, the first thermal expansion element 22 is at least partially positioned with the supply flow path 20 of the housing 15 and is in direct contact with the heating medium flowing through supply flow path 20 of the housing 15. Alternatively, the first thermal expansion element 22 may be encapsulated and in indirect contact with the heating medium flowing through supply flow path 20. However, a first thermal expansion element 22 being in direct contact with the heating medium flowing through supply flow path 20 is preferred. The expansion status of the first thermal expansion element 22 depends from the temperature of the heating medium within the supply flow path 20.

The radiator balancing device 14 further comprises a second thermal expansion element 23. Preferably, the second thermal expansion element 23 is at least partially positioned with the return flow path 21 of the housing 15 and in direct contact with the heating medium flowing through return flow path 21 of the housing 15. Alternatively, the second thermal expansion element 23 may be encapsulated and in indirect contact with the heating medium flowing return supply flow path 21. However, a second thermal expansion element 23 being in direct contact with the heating medium flowing through return flow path 21 is preferred. The expansion status of the second thermal expansion element 23 depends from the temperature of the heating medium within the return flow path 21.

The first thermal expansion element 22 is at least partially positioned within the first housing section 15A and third housing section 15C. The second thermal expansion element 23 is at least partially positioned within the second housing section 15B and third housing section 15C. The first thermal expansion element 22 and the second thermal expansion element 23 are axially aligned in such a way that a longitudinal axis of the first and second thermal expansion elements 22, 23 are coaxial and extend in the direction of the third housing section 15C.

The radiator balancing device 14 further comprises a valve 24 having a valve seat 25 provided within the return flow path 21 of the housing 15. The valve 24 has further a valve plunger 27. Prefrably, the valve plunger 27 is provided by a first end section of the second thermal expansion element 23. The valve plunger 27 may also be provided by a separate element attached to the first end section of the second thermal expansion element 23.

A change in the thermal expansion status of the second thermal expansion element 23 causes a change in the relative position between the valve plunger 27 and the valve seat 25 of the valve 24. The valve seat 25 is provided by a valve seat element 28 that is screwed into an opening of the housing 15. The valve plunger 27 carries a seal 38.

The radiator balancing device 14 further comprises a piston 26 positioned between the first thermal expansion element 22 and the second thermal expansion element 23. The third housing section 15C accommodates the piston 26. The position 26 is moveable within the third housing section 15C. The piston 26 acts in combination with the two thermal expansion elements 22, 23 in such a way that a change in the thermal expansion status of the first thermal expansion element 22 impacts the position of the second thermal expansion element 23 and may thereby cause a change in the relative position between the valve plunger 27 and the valve seat 25 of the valve 24.

In the shown embodiment, a first piston section 26A of the piston 26 is in contact with the first thermal expansion element 22. A second piston section 26B of the piston 26 is coupled to a second end section of the second thermal expansion element 23. A change in the thermal expansion status of the first thermal expansion element 22 impacts the position of the second thermal expansion element 23 and may change the relative position between the valve plunger 27 and the valve seat 25 of the valve 24.

The radiator balancing device 14 further comprises a stop element 29 fixedly mounted within the housing 15. The stop element 29 is fixedly attached within the third housing section 15C of the housing 15. The stop element 29 is positioned between the first thermal expansion element 22 and the second thermal expansion element 23. The third housing section 15C accommodates the stop element 29. The stop element 29 is not moveable within the third housing section 15C.

The stop element 29 provides a first stop 29A for first thermal expansion element 22. The stop element 29 further provides a second stop 29B for the piston 26, namely for the second piston section 26B of the piston 26. The first stop 29A and the second stop 29B both limit the impact of the change in the thermal expansion status of the first thermal expansion element 22 to the relative position between the valve plunger 27 and the valve seat 25 of the valve 24. The first stop 29A limits the impact of the change in the thermal expansion status of the first thermal expansion element 22 to the relative position between the valve plunger 27 and the valve seat 25 of the valve 24 when the temperature of the heating medium within the supply flow path 20 decreases. The second stop 29B limits the impact of the change in the thermal expansion status of the first thermal expansion element 22 to the relative position between the valve plunger 27 and the valve seat 25 of the valve 24 when the temperature of the heating medium within the supply flow path 20 increases.

In the shown embodiment, the first piston section 26A of the piston 26 is in contact with a first side of the first thermal expansion element 22. A first spring 30 tends to press the first side of the first thermal expansion element 22 against the first piston section 26A of the piston 26. The second piston section 26B of the piston 26 is coupled to the second thermal expansion element 23. A second spring 31 tends to press the piston 26, namely the second piston section 26B against the second stop 29B of the stop element 29.

The first piston section 26A of the position 26 is provided by two protrusions defining a space 26C for accommodating the stop element 29. The position 26 can move relative to the stop element 29. The second piston section 26B provides a groove 32 accommodating a seal 33. Heating medium cannot flow through the third housing section 15C. So, a flow of heating medium between the supply flow path 20 and the return flow path 21 through the housing section 15C is impossible.

As mentioned above, the expansion status of the second thermal expansion element 23 depends from the temperature of the heating medium within the return flow path 21. When the temperature of the heating medium flowing through the return flow path 21 is increasing, the vale plunger 27 provided by second thermal expansion element 23 moves closer to the valve seat 25 in order to close the valve 24.

Figures 3 and 4 illustrate the change of the closing position of the valve 24 as a function of the temperature of the heating medium flowing through the return flow path 21. In Figures 3 and 4 the temperature of the heating medium flowing through the supply flow path 20 is the same. So, the expansion status of the first thermal expansion element 22 is the same in Figures 3 and 4.

However, in Figure 4 the temperature of the heating medium flowing through the return flow path 21 is greater than in Figure 3. So, the temperature drop of the heating medium over the radiator is in Figure 4 smaller than in Figure 3. In Figure 4 the respective radiator requires no flow of heating medium. So, in Figure 4 the valve is closed.

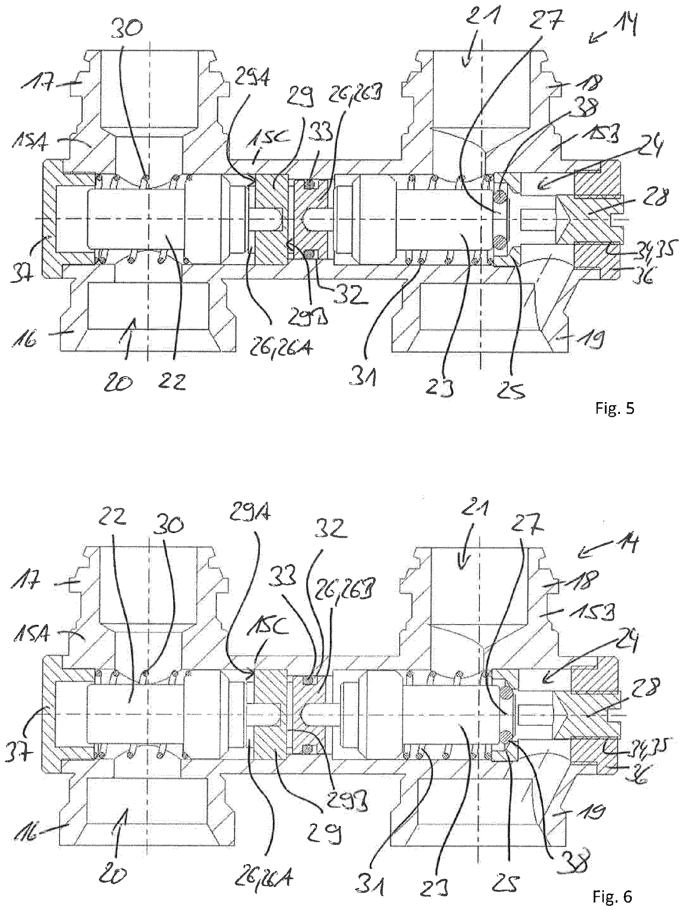

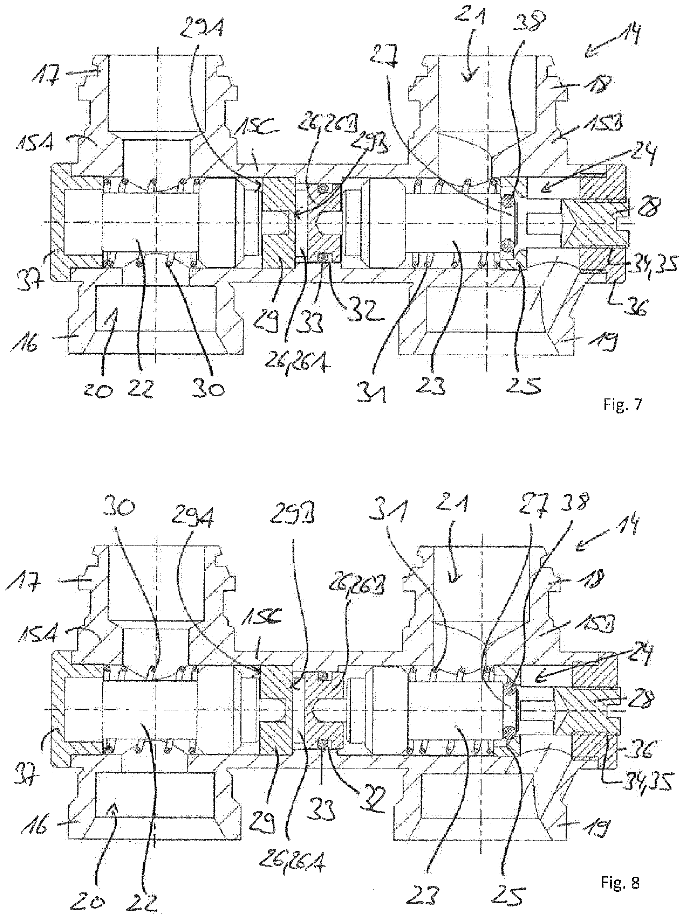

The above is true also for Figures 5 and 6, Figures 7 and 8. In Figures 5 and 6 the temperature of the heating medium flowing through the supply flow path 20 is the same. Also in Figures 7 and 8 the temperature of the heating medium flowing through the supply flow path 20 is the same. However, in Figure 6 the temperature of the heating medium flowing through the return flow path 21 is greater than in Figure 5. Also in Figure 8 the temperature of the heating medium flowing through the return flow path 21 is greater than in Figure 7.

As further mentioned above, the expansion status of the first thermal expansion element 22 depends from the temperature of the heating medium within the supply flow path 20. When the temperature of the heating medium flowing through the supply flow path 20 decreases, the first thermal expansion element 22 moves the position 26 and thereby the valve plunger 27 provided by the second thermal expansion element 23 closer to the valve seat 25. When the temperature of the heating medium flowing through the supply flow path 20 increases, the position 26 and thereby the valve plunger 27 provided by the second thermal expansion element 23 moves away from the valve seat 25. This movement of the valve plunger 27 relative to the valve seat 25 caused by a change of the expansion status of the first thermal expansion element 22 is limited by the stops 29A, 29B of the stop element 29.

The first stop 29A limits the impact of the change in the thermal expansion status of the first thermal expansion element 22 to the relative position between the valve plunger 27 and the valve seat 25 of the valve 24 when the temperature of the heating medium within the supply flow path 20 decreases.

The second stop 29B limits the impact of the change in the thermal expansion status of the first thermal expansion element 22 to the relative position between the valve plunger 27 and the valve seat 25 of the valve 24 when the temperature of the heating medium within the supply flow path 20 increases.

In Figures 3, 4 the second stop 29B is active. In Figures 3, 4 the second piston section 26B is pressed against the second stop 29B. If in Figures 3, 4 the temperature of the heating medium within the supply flow path 20 would increase, the valve plunger 27 could not move further away from the valve seat 25 because of the second stop 29B.

In Figures 7, 8 the first stop 29A is active. In Figures 7, 8 the first thermal expansion element 22 is pressed against the first stop 29A. If in Figures 7, 8 the temperature of the heating medium within the supply flow path 20 would decrease, the valve plunger 27 could not move further towards the valve seat 25 because of the first stop 29A.

In Figures 5, 6 neither the first stop 29A nor the second stop 29B is active. In Figures 5, 6 the temperature of the heating medium within the supply flow path 20 is lower than in Figures 3, 4 but higher than in Figures 7, 8. If in Figures 5, 6 the temperature of the heating medium within the supply flow path 20 would decrease, the position 26 would move further to the right. If in Figures 5, 6 the temperature of the heating medium within the supply flow path 20 would increase, the position 26 would move further to the left.

During operation heating medium flows through the supply flow path 21 the housing 15, and its temperature is sensed by the first thermal expansion element 22. The first thermal expansion element 22 responds by setting a position of the piston 26 and valve plunger 27 with respect to the stop element 29 fixedly mounted within the housing 15.

The heating medium returned by the radiator enters the return flow path 21 of the housing, and its temperature is sensed by the second thermal expansion element 23, which responds by setting a stroke from the valve plunger 27 to valve seat 25. The second thermal expansion element 23 rests against the piston 26. The position of the piston 26 is delimited by the first thermal expansion element 22, or by the stop element 29.

When the supply temperature decreases, the first thermal expansion element 22 will contract. The piston 26 moves to the right. As a result, the valve plunger 27 provided by the second side thermal expansion element 23 will close against the valves seat 25 at a correspondingly lower temperature. On the other hand, when the supply temperature increases, the first thermal expansion element 22 will expand. The piston 26 moves to the left, but only up to the second stop 29B provides by the stop element 29. The temperature at which the return side closes can never exceed the value for condensation at the boiler.

The closing temperature of the valve 24 can be adjusted from the outside by rotating the valve seat element 28 providing the valve seat 25. The valve seat element 28 has an outer thread 34 acting together with an inner thread 35 of a cap 36 positioned within the opening at the return side of the housing 15. This return temperature setting mechanism can also be used to shut the return side of the device 14.

A cap 37 positioned within an opening at the supply side of the housing 15 can be adapted to provide for shutting the supply side of the device 14 by rotating the cap 37.

### List of reference signs

- 10: radiator
- 11: supply pipe
- 12: return pipe
- 13: boiler
- 14: radiator balancing device
- 15: housing
- 15A: first housing section
- 15B: second housing section
- 15C: third housing section
- 16: first connection interface
- 17: second connection interface
- 18: third connection interface
- 19: fourth connection interface
- 20: supply flow path
- 21: return flow path
- 22: first thermal expansion element
- 23: second thermal expansion element
- 24: valve
- 25: valve seat
- 26: piston
- 26A: first piston section
- 26B: second piston section
- 26C: space
- 27: valve plunger
- 28: valve seat element
- 29: stop element
- 29A: first stop
- 29B: second stop
- 30: spring
- 31: spring
- 32: recess
- 33: seal
- 34: inner thread
- 35: outer thread
- 36: cap
- 37: cap
- 38: seal

## Claims

1. Radiator balancing device (14) for connecting a radiator to pipes of a hydronic heating system so that a heating medium can flow from a supply pipe of the hydronic heating system into the radiator and then from the radiator into a return pipe of the hydronic heating system, comprising
a housing (15),
wherein the housing (15) has a first connection interface (16) adapted to be connected to the supply pipe of the hydronic heating system, a second connection interface (17) adapted to be connected to a supply connection of a radiator, a third connection interface (18) adapted to be connected to a return connection of the radiator, and a fourth connection interface (19) adapted to be connected to the return pipe of the hydronic heating system,
wherein the housing (15) defines a supply flow path (20) extending between the first connection interface (16) and the second connection interface (17) and a return flow path (21) extending between the third connection interface (18) and the fourth connection interface (19),
a first thermal expansion element (22),
wherein the expansion status of the first thermal expansion element (22) depends from the temperature of the heating medium within the supply flow path (20),
a second thermal expansion element (23),
wherein the expansion status of the second thermal expansion element (23) depends from the temperature of the heating medium within the return flow path (21),
a valve (24) having a valve seat (25) provided within the return flow path (21) of the housing (15) and a valve plunger (27),
wherein a change in the thermal expansion status of the second thermal expansion element (23) causes a change in the relative position between the valve plunger (27) and the valve seat (25) of the valve (24), and
a piston (26) positioned between the first thermal expansion element (22) and the second thermal expansion element (23),
wherein the piston (26) acts in combination with the two thermal expansion elements (22, 23) in such a way that a change in the thermal expansion status of the first thermal expansion element (22) impacts the position of the second thermal expansion element (23) and may thereby cause a change in the relative position between the valve plunger (27) and the valve seat (25) of the valve (24),
**characterized in that**
the valve seat (25) is provided by a valve seat element (28) that is screwed into the housing (15), wherein the screwing position of the valve seat element (28) that provides the valve seat (25) defines a closing temperature of the valve (24).

2. Radiator balancing device according to claim 1, **characterized in that**
the first thermal expansion element (22) is at least partially positioned with the supply flow path (20) of the housing (15);
the second thermal expansion element (23) is at least partially positioned with the return flow path (21) of the housing (15).

3. Radiator balancing device according to claim 1 or 2, **characterized by** a stop element (29) fixedly mounted within the housing (15),
wherein the stop element (29) provides a first stop (29A) for first thermal expansion element (22),
wherein the stop element (29) provides a second stop (29B) for the piston (26),
wherein the first stop (29A) and the second stop (29B) both limit the impact of the change in the thermal expansion status of the first thermal expansion element (22) to the relative position between the valve plunger (27) and the valve seat (25) of the valve (24).

4. Radiator balancing device according to claim 3, **characterized in that** the first stop (29A) limits the impact of the change in the thermal expansion status of the first thermal expansion element (22) to the relative position between the valve plunger (27) and the valve seat (25) when the temperature of the heating medium within the supply flow path (20) decreases.

5. Radiator balancing device according to claim 3 or 4, **characterized in that** the second stop (29B) limits the impact of the change in the thermal expansion status of the first thermal expansion element (22) to the relative position between the valve plunger (27) and the valve seat (25) when the temperature of the heating medium within the supply flow path (20) increases.

6. Radiator balancing device according to one of claims 3 to 5, **characterized in that** the stop element (29) is positioned between the first thermal expansion element (22) and the second thermal expansion element (23).

7. Radiator balancing device according to one of claims 1 to 6, **characterized in that** a first piston section (26A) of the piston (26) is coupled to a first side of the first thermal expansion element (22), wherein a first spring (30) tends to press the first side of the first thermal expansion element (22) against the first piston section (26A) of the piston (26).

8. Radiator balancing device according to one of claims 3 to 7, **characterized in that** a second piston section (26B) of the piston (26) is coupled to the second thermal expansion element (23), wherein a second spring (31) tends to press the piston (26) against the second stop (29B) of the stop element.

9. Radiator balancing device according to one of claims 1 to 8, **characterized in that** the first end section of the second thermal expansion element (23) that provides the valve plunger (27) which preferably carries a seal (38).

10. Radiator balancing device according to one of claims 1 to 9, **characterized in that** the housing (15) is provided by a block,
the block having a first housing section (15A) that provides the supply flow path (20),
the block having a second housing section (15B) that provides the return flow path (21),
the block having a third housing section (15C) that extends between the first housing section (15A) and the second housing section (15B) and that accommodates the piston (26),
wherein the second housing section (15B) runs parallel to first housing section (15A), and wherein third housing section (15C) runs perpendicular to first and second housing sections (15A, 15B).

11. Radiator balancing device according to claim 10, **characterized in that** the piston (26) is moveable within the third section (15C).

12. Radiator balancing device according to claim 10 or 11, **characterized in that** the stop element (29) is fixedly attached within the third housing section (15C) of the housing (15).

13. Radiator balancing device according to claim 11 or 12, **characterized in that**
the first thermal expansion element (22) is partially positioned within the first housing section (15A) and third housing section (15C),
the second thermal expansion element (23) is partially positioned within the second housing section (15B) and third housing section (15C),
wherein the first thermal expansion element (22) and the second thermal expansion element (23) are axially aligned in such a way that a longitudinal axis of the first and second thermal expansion element (22, 23) are coaxial and extend in the moving direction of the piston (26) within the third housing section (15C) of the housing (15).

14. Radiator balancing device according to one of claims 11 to 13, **characterized in that** the moving direction of the piston (26) within the third housing section (15C) of the housing (15) runs perpendicular to a flow direction of the heating medium through the first and second housing sections (15A, 15B).

## Patentansprüche

1. Ausgleichsvorrichtung für Heizkörper (14) zum Anschließen eines Heizkörpers an Leitungen eines hydronischen Heizsystems, so dass ein Heizmedium von einer Zufuhrleitung des hydronischen Heizsystems in den Heizkörper und dann von dem Heizkörper in eine Rückführleitung des hydronischen Heizsystems strömen kann, umfassend:
ein Gehäuse (15),
wobei das Gehäuse (15) eine erste Anschlussstelle (16) aufweist, die dafür eingerichtet ist, an die Zufuhrleitung des hydronischen Heizsystems angeschlossen zu sein, eine zweite Anschlussstelle (17), die dafür eingerichtet ist, an einen Zufuhranschluss eines Heizkörpers angeschlossen zu sein, ein dritte Anschlussstelle (18), die dafür eingerichtet ist, an einen Rückführanschluss des Heizkörpers angeschlossen zu sein, und eine vierte Anschlussstelle (19), die dafür eingerichtet ist, an die Rückführleitung des hydronischen Heizsystems angeschlossen zu sein,
wobei das Gehäuse (15) einen Zufuhrströmungsweg (20) definiert, der sich zwischen der ersten Anschlussstelle (16) und der zweiten Anschlussstelle (17) erstreckt, und einen Rückführströmungsweg (21), der sich zwischen der dritten Anschlussstelle (18) und der vierten Anschlussstelle (19) erstreckt,
ein erstes Thermoausdehnungselement (22),
wobei der Ausdehnungszustand des ersten Thermoausdehnungselements (22) von der Temperatur des Heizmediums in dem Zufuhrströmungsweg (20) abhängt,
ein zweites Thermoausdehnungselement (23),
wobei der Ausdehnungszustand des zweiten Thermoausdehnungselements (23) von der Temperatur des Heizmediums in dem Rückführströmungsweg (21) abhängt,
ein Ventil (24) mit einem Ventilsitz (25), der in dem Rückführströmungsweg (21) des Gehäuses (15) bereitgestellt ist, und mit einem Ventilstößel (27),
wobei eine Veränderung des Zustandes der thermischen Ausdehnung des zweiten Thermoausdehnungselements (23) eine Veränderung der relativen Position zwischen dem Ventilstößel (27) und dem Ventilsitz (25) des Ventils (24) bewirkt,
und
einen Kolben (26), der zwischen dem ersten Thermoausdehnungselement (22) und dem zweiten Thermoausdehnungselement (23) positioniert ist,
wobei der Kolben (26) in Kombination mit den zwei Thermoausdehnungselementen (22, 23) derartig wirkt, dass eine Veränderung des Zustandes der thermischen Ausdehnung des ersten Thermoausdehnungselements (22) die Position des zweiten Thermoausdehnungselements (23) beeinflusst und dadurch eine Veränderung der relativen Position zwischen dem Ventilstößel (27) und dem Ventilsitz (25) des Ventils (24) bewirken kann,
**dadurch gekennzeichnet, dass**
der Ventilsitz (25) mit einem Ventilsitzelement (28) versehen ist, das in das Gehäuse (15) geschraubt ist, wobei die Schraubposition des Ventilsitzelements (28), das den Ventilsitz (25) bereitstellt, eine Schließtemperatur des Ventils (24) definiert.

2. Ausgleichsvorrichtung für Heizkörper nach Anspruch 1, **dadurch gekennzeichnet, dass:**
das erste Thermoausdehnungselement (22) zumindest teilweise in dem Zufuhrströmungsweg (20) des Gehäuses (15) positioniert ist,
das zweite Thermoausdehnungselement (23) zumindest teilweise in dem Rückführströmungsweg (21)) des Gehäuses (15) positioniert ist.

3. Ausgleichsvorrichtung für Heizkörper nach Anspruch 1 oder 2, **gekennzeichnet durch**
ein Anschlagelement (29), das fest in das Gehäuse (15) montiert ist,
wobei das Anschlagelement (29) einen ersten Anschlag (29A) für das erste Thermoausdehnungselement (22) bereitstellt,
wobei das Anschlagelement (29) einen zweiten Anschlag (29B) für den Kolben (26) bereitstellt,
wobei sowohl der erste Anschlag (29A) als auch der zweite Anschlag (29B) den Einfluss der Veränderung des Zustandes der thermischen Ausdehnung des ersten Thermoausdehnungselements (22) auf die relative Position zwischen dem Ventilstößel (27) und dem Ventilsitz (25) des Ventils (24) beschränken.

4. Ausgleichsvorrichtung für Heizkörper nach Anspruch 3, **dadurch gekennzeichnet, dass** der erste Anschlag (29A) den Einfluss der Veränderung des Zustandes der thermischen Ausdehnung des ersten Thermoausdehnungselements (22) auf die relative Position zwischen dem Ventilstößel (27) und dem Ventilsitz (25) beschränkt, wenn die Temperatur des Heizmediums in dem Zufuhrströmungsweg (20) abnimmt.

5. Ausgleichsvorrichtung für Heizkörper nach Anspruch 3 oder 4, **dadurch gekennzeichnet, dass** der zweite Anschlag (29B) den Einfluss der Veränderung des Zustandes der thermischen Ausdehnung des ersten Thermoausdehnungselements (22) auf die relative Position zwischen dem Ventilstößel (27) und dem Ventilsitz (25) beschränkt, wenn die Temperatur des Heizmediums in dem Zufuhrströmungsweg (20) zunimmt.

6. Ausgleichsvorrichtung für Heizkörper nach einem der Ansprüche 3 bis 5, **dadurch gekennzeichnet, dass** das Anschlagelement (29) zwischen dem ersten Thermoausdehnungselement (22) und dem zweiten Thermoausdehnungselement (23) angeordnet ist.

7. Ausgleichsvorrichtung für Heizkörper nach einem der Ansprüche 1 bis 6, **dadurch gekennzeichnet, dass** ein erster Kolbenabschnitt (26A) des Kolbens (26) an eine erste Seite des ersten Thermoausdehnungselements (22) gekoppelt ist, wobei eine erste Feder (30) tendenziell die erste Seite des ersten Thermoausdehnungselements (22) gegen den ersten Kolbenabschnitt (26A) des Kolbens (26) presst.

8. Ausgleichsvorrichtung für Heizkörper nach einem der Ansprüche 3 bis 7, **dadurch gekennzeichnet, dass** ein zweiter Kolbenabschnitt (26B) des Kolbens (26) an das zweite Thermoausdehnungselement (23) gekoppelt ist, wobei eine zweite Feder (31) tendenziell den Kolben (26) gegen den zweiten Anschlag (29B) des Anschlagelements presst.

9. Ausgleichsvorrichtung für Heizkörper nach einem der Ansprüche 1 bis 8, **dadurch gekennzeichnet, dass** der erste Endabschnitt des zweiten Thermoausdehnungselements (23), der den Ventilstößel (27) bereitstellt, der vorzugsweise eine Dichtung (38) trägt.

10. Ausgleichsvorrichtung für Heizkörper nach einem der Ansprüche 1 bis 9, **dadurch gekennzeichnet, dass** das Gehäuse (15) durch einen Block bereitgestellt ist, wobei:
der Block einen ersten Gehäuseabschnitt (15A) aufweist, der den Zufuhrströmungsweg (20) bereitstellt,
der Block einen zweiten Gehäuseabschnitt (15B) aufweist, der den Rückführströmungsweg (21) bereitstellt,
der Block einen dritten Gehäuseabschnitt (15C) aufweist, der sich zwischen dem ersten Gehäuseabschnitt (15A) und dem zweiten Gehäuseabschnitt (15B) erstreckt, und der den Kolben (26) beherbergt,
wobei der zweite Gehäuseabschnitt (15B) parallel zum ersten Gehäuseabschnitt (15A) verläuft und wobei der dritte Gehäuseabschnitt (15C) senkrecht zum ersten und zum zweiten Gehäuseabschnitt (15A, 15B) verläuft.

11. Ausgleichsvorrichtung für Heizkörper nach Anspruch 10, **dadurch gekennzeichnet, dass** der Kolben (26) in dem dritten Abschnitt (15C) beweglich ist.

12. Ausgleichsvorrichtung für Heizkörper nach Anspruch 10 oder 11, **dadurch gekennzeichnet, dass** das Anschlagelement (29) fest in dem dritten Gehäuseabschnitt (15C) des Gehäuses (15) angebracht ist.

13. Ausgleichsvorrichtung für Heizkörper nach Anspruch 11 oder 12, **dadurch gekennzeichnet, dass:**
das erste Thermoausdehnungselement (22) teilweise in dem ersten Gehäuseabschnitt (15A) und dem dritten Gehäuseabschnitt (15C) positioniert ist,
das zweite Thermoausdehnungselement (23) teilweise in dem zweiten Gehäuseabschnitt (15B) und dem dritten Gehäuseabschnitt (15C) positioniert ist,
wobei das erste Thermoausdehnungselement (22) und das zweite Thermoausdehnungselement (23) axial derart ausgerichtet sind, dass die Längsachsen des ersten und des zweiten Thermoausdehnungselements (22, 23) koaxial sind und sich in der Bewegungsrichtung des Kolbens (26) in dem dritten Gehäuseabschnitt (15C) des Gehäuses (15) erstrecken.

14. Ausgleichsvorrichtung für Heizkörper nach einem der Ansprüche 11 bis 13, **dadurch gekennzeichnet, dass** die Bewegungsrichtung des Kolbens (26) in dem dritten Gehäuseabschnitt (15C) des Gehäuses (15) senkrecht zu einer Strömungsrichtung des Heizmediums durch den ersten und den zweiten Gehäuseabschnitt (15A, 15B) verläuft.

## Revendications

1. Dispositif d'équilibrage de radiateur (14) pour raccorder un radiateur à des tuyaux d'un système de chauffage hydronique pour qu'un agent chauffant puisse s'écouler, à partir d'un tuyau d'alimentation du système de chauffage hydronique, dans le radiateur et ensuite, à partir du radiateur, dans un tuyau de retour du système de chauffage hydronique, comprenant
un logement (15),
dans lequel le logement (15) a une première interface de raccordement (16) adaptée pour être raccordée au tuyau d'alimentation du système de chauffage hydronique, une deuxième interface de raccordement (17) adaptée pour être raccordée à un raccordement d'alimentation d'un radiateur, une troisième interface de raccordement (18) adaptée pour être raccordée à un raccordement de retour du radiateur, et une quatrième interface de raccordement (19) adaptée pour être raccordée au tuyau de retour du système de chauffage hydronique,
dans lequel le logement (15) définit un chemin d'écoulement d'alimentation (20) s'étendant entre la première interface de raccordement (16) et la deuxième interface de raccordement (17) et un chemin d'écoulement de retour (21) s'étendant entre la troisième interface de raccordement (18) et la quatrième interface de raccordement (19),
un premier élément à dilatation thermique (22),
dans lequel l'état de dilatation du premier élément à dilatation thermique (22) dépend de la température de l'agent chauffant à l'intérieur du chemin d'écoulement d'alimentation (20),
un second élément à dilatation thermique (23),
dans lequel l'état de dilatation du second élément à dilatation thermique (23) dépend de la température de l'agent chauffant à l'intérieur du chemin d'écoulement de retour (21),
une soupape (24) ayant un siège de soupape (25) prévu à l'intérieur du chemin d'écoulement de retour (21) du logement (15) et un piston plongeur de soupape (27),
dans lequel un changement de l'état de dilatation thermique du second élément à dilatation thermique (23) entraîne un changement de la position relative entre le piston plongeur de soupape (27) et le siège de soupape (25) de la soupape (24), et
un piston (26) positionné entre le premier élément à dilatation thermique (22) et le second élément à dilatation thermique (23),
dans lequel le piston (26) agit en association avec les deux éléments à dilatation thermique (22, 23) de manière telle qu'un changement de l'état de dilatation thermique du premier élément à dilatation thermique (22) ait un impact sur la position du second élément à dilatation thermique (23) et puisse ainsi entraîner un changement de la position relative entre le piston plongeur de soupape (27) et le siège de soupape (25) de la soupape (24),
**caractérisé en ce que**
le siège de soupape (25) est fourni par un élément de siège de soupape (28) qui est vissé dans le logement (15), dans lequel la position de vissage de l'élément de siège de soupape (28) qui fournit le siège de soupape (25) définit une température de fermeture de la soupape (24).

2. Dispositif d'équilibrage de radiateur selon la revendication 1, **caractérisé en ce que**
le premier élément à dilatation thermique (22) est au moins partiellement positionné avec le chemin d'écoulement d'alimentation (20) du logement (15) ;
le second élément à dilatation thermique (23) est au moins partiellement positionné avec le chemin d'écoulement de retour (21) du logement (15).

3. Dispositif d'équilibrage de radiateur selon la revendication 1 ou 2, **caractérisé par**
un élément de butée (29) monté de façon fixe à l'intérieur du logement (15),
dans lequel l'élément de butée (29) fournit une première butée (29A) pour le premier élément à dilatation thermique (22),
dans lequel l'élément de butée (29) fournit une seconde butée (29B) pour le piston (26),
dans lequel la première butée (29A) et la seconde butée (29B) limitent toutes les deux l'impact du changement de l'état de dilatation thermique du premier élément à dilatation thermique (22) à la position relative entre le piston plongeur de soupape (27) et le siège de soupape (25) de la soupape (24).

4. Dispositif d'équilibrage de radiateur selon la revendication 3, **caractérisé en ce que** la première butée (29A) limite l'impact du changement de l'état de dilatation thermique du premier élément à dilatation thermique (22) à la position relative entre le piston plongeur de soupape (27) et le siège de soupape (25) lorsque la température de l'agent chauffant à l'intérieur du chemin d'écoulement d'alimentation (20) diminue.

5. Dispositif d'équilibrage de radiateur selon la revendication 3 ou 4, **caractérisé en ce que** la seconde butée (29B) limite l'impact du changement de l'état de dilatation thermique du premier élément à dilatation thermique (22) à la position relative entre le piston plongeur de soupape (27) et le siège de soupape (25) lorsque la température de l'agent chauffant à l'intérieur du chemin d'écoulement d'alimentation (20) augmente.

6. Dispositif d'équilibrage de radiateur selon l'une des revendications 3 à 5, **caractérisé en ce que** l'élément de butée (29) est positionné entre le premier élément à dilatation thermique (22) et le second élément à dilatation thermique (23).

7. Dispositif d'équilibrage de radiateur selon l'une des revendications 1 à 6, **caractérisé en ce qu'**une première section de piston (26A) du piston (26) est couplée à un premier côté du premier élément à dilatation thermique (22), dans lequel un premier ressort (30) a tendance à presser le premier côté du premier élément à dilatation thermique (22) contre la première section de piston (26A) du piston (26).

8. Dispositif d'équilibrage de radiateur selon l'une des revendications 3 à 7, **caractérisé en ce qu'**une seconde section de piston (26B) du piston (26) est couplée au second élément à dilatation thermique (23), dans lequel un second ressort (31) a tendance à presser le piston (26) contre la seconde butée (29B) de l'élément de butée.

9. Dispositif d'équilibrage de radiateur selon l'une des revendications 1 à 8, **caractérisé en ce que** la première section d'extrémité du second élément à dilatation thermique (23) qui fournit le piston plongeur de soupape (27) qui de préférence supporte un joint d'étanchéité (38).

10. Dispositif d'équilibrage de radiateur selon l'une des revendications 1 à 9, **caractérisé en ce que** le logement (15) est fourni par un bloc,
le bloc ayant une première section de logement (15A) qui fournit le chemin d'écoulement d'alimentation (20),
le bloc ayant une deuxième section de logement (15B) qui fournit le chemin d'écoulement de retour (21),
le bloc ayant une troisième section de logement (15C) qui s'étend entre la première section de logement (15A) et la deuxième section de logement (15B) et qui loge le piston (26),
dans lequel la deuxième section de logement (15B) est parallèle à la première section de logement (15A), et dans lequel la troisième section de logement (15C) est perpendiculaire aux première et deuxième sections de logement (15A, 15B).

11. Dispositif d'équilibrage de radiateur selon la revendication 10, **caractérisé en ce que** le piston (26) est mobile à l'intérieur de la troisième section (15C).

12. Dispositif d'équilibrage de radiateur selon la revendication 10 ou 11, **caractérisé en ce que** l'élément de butée (29) est attaché de façon fixe à l'intérieur de la troisième section de logement (15C) du logement (15).

13. Dispositif d'équilibrage de radiateur selon la revendication 11 ou 12, **caractérisé en ce que**
le premier élément à dilatation thermique (22) est partiellement positionné à l'intérieur de la première section de logement (15A) et de la troisième section de logement (15C),
le second élément à dilatation thermique (23) est partiellement positionné à l'intérieur de la deuxième section de logement (15B) et de la troisième section de logement (15C),
dans lequel le premier élément à dilatation thermique (22) et le second élément à dilatation thermique (23) sont axialement alignés de manière telle qu'un axe longitudinal du premier et du second élément à dilatation thermique (22, 23) sont coaxiaux et s'étendent dans la direction de mouvement du piston (26) à l'intérieur de la troisième section de logement (15C) du logement (15).

14. Dispositif d'équilibrage de radiateur selon l'une des revendications 11 à 13, **caractérisé en ce que** la direction de mouvement du piston (26) à l'intérieur de la troisième section de logement (15C) du logement (15) est perpendiculaire à une direction d'écoulement de l'agent chauffant à travers les première et deuxième sections de logement (15A, 15B).
